**Europäisches Patentamt**

**European Patent Office**

**Office européen des brevets**

(19)

(11) Publication number : **0 488 426 A2**

(12) # EUROPEAN PATENT APPLICATION

(21) Application number : **91120687.8**

(22) Date of filing : **02.12.91**

(51) Int. Cl.⁵ : **H02J 7/02**

(30) Priority : **30.11.90 JP 339027/90**

(43) Date of publication of application : **03.06.92 Bulletin 92/23**

(84) Designated Contracting States : **DE FR GB IT NL**

(71) Applicant : **NEC CORPORATION**
**7-1, Shiba 5-chome Minato-ku**
**Tokyo 108-01 (JP)**

(72) Inventor : **Yokogawa, Takeshi, c/o NEC Engineering, Ltd.**
**20-4, Nishishinbashi 3-chome**
**Minato-ku, Tokyo (JP)**

(74) Representative : **Glawe, Delfs, Moll & Partner Patentanwälte**
**Postfach 26 01 62**
**W-8000 München 26 (DE)**

(54) **Battery charger with cell failure warning circuit.**

(57) In a battery charger, a barging current is supplied to a rechargeable battery and a load current to a load circuit from a DC voltage source during a charging mode and the battery is allowed to supply a load current to the load circuit during a subsequent discharging mode. The battery voltage is compared with a reference voltage for detecting a low voltage condition, whereupon a counter is triggered and a warning signal is generated if the low voltage condition continues for an interval longer than a specified value. According to a second embodiment, the battery voltage is compared with low and high reference voltages and a first comparison signal is generated when it is lower than the former and a second comparison signal is generated when it is higher than the latter. The high reference voltage is set equal to a value which is lower than a voltage to which the battery can be charged during a normal condition, but higher than a maximum voltage to which it can be charged during an abnormal condition. A warning signal is generated if the first comparison signal is not followed by the second comparison signal.

FIG. 1

## BACKGROUND OF THE INVENTION

The present invention relates to a battery charger.

Conventional battery chargers include a charging controller for controlling a charging voltage, monitoring circuits to prevent the battery from being overcharged or overdischarged, and an anti-reverse current unit to prevent a reverse current. However, each cell of the battery has a possibility of causing a short-circuit failure during a discharging mode. If this condition should occur, the battery will eventually be damaged. In addition, if a rechargeable battery is used as a power backup for a volatile memory and of a cell failure go unnoticed, the contents of the memory will be lost entirely.

## SUMMARY OF THE INVENTION

It is therefore an object of the present invention to provide a battery charger having means for giving a warning signal when a short-circuit failure occurs in a cell of a multi-cell rechargeable battery.

According to a first aspect of the present invention, a charging current is supplied to a rechargeable battery and a load current to a load circuit from a DC voltage source at periodic intervals during a charging mode and the battery is allowed to supply a load current to the load circuit during a discharging mode instead of from the DC voltage source. The battery voltage is compared with a reference voltage. If the battery voltage is lower than the reference voltage, a counter is triggered and a warning signal is generated if the low voltage condition continues for an interval longer than a specified interval.

According to a second aspect of this invention, a charging current is supplied to a rechargeable battery and a load current to a load circuit from a DC voltage source during a charging mode and the battery is allowed to supply a load current to the load circuit during a discharging mode instead of from the DC voltage source. The battery voltage is compared with a low reference voltage and a first comparison signal is generated when it is lower than the low reference voltage and is further compared with a high reference voltage to generate a second comparison signal when it is higher than the high reference voltage. The high reference voltage is set equal to a value which is lower than a voltage to which the battery can be charged during a normal condition, but higher than a voltage to which it can be charged during an abnormal condition. A warning signal is generated if the first comparison signal is not followed by the second comparison signal.

## BRIEF DESCRIPTION OF THE DRAWINGS

The present invention will be described in further detail with reference to the accompanying drawings, in which:

Fig. 1 is a block diagram of a battery charger according to one embodiment of the present invention;

Fig. 2 is a graphic representation useful for describing the operation of Fig. 1 ;

Fig. 3 is a block diagram of a battery charger according to a second embodiment of the present invention; and

Fig. 4 is a graphic representation useful for describing the operation of Fig. 3.

## DETAILED DESCRIPTION

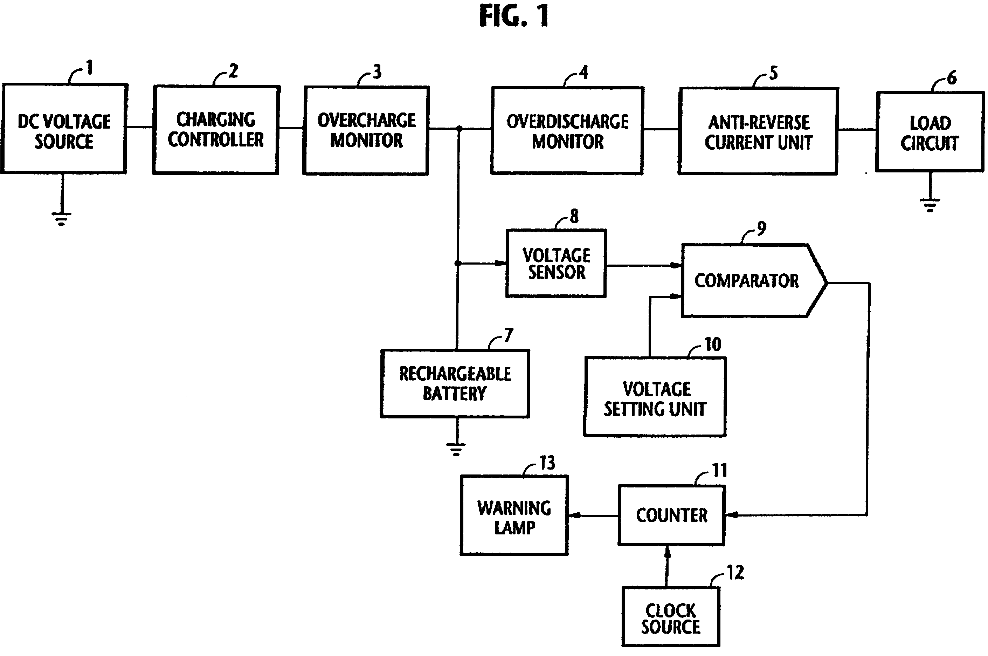

As shown in Fig. 1, a battery charger according to a first embodiment of the present invention includes a charging controller 2 which is coupled to a DC voltage source 1 to operate the charger in a charging and discharging modes at periodic intervals. An overcharging monitor 3 is coupled to the output of charging controller 2. The output of overcharge circuit 3 is used for supplying a charging current to a rechargeable battery 7 such as multi-cell nickel cadmium batteries. An overdischarge monitor 4 is coupled to the battery 7 to detect when the battery is overdischarge. An anti-reverse current unit 5 is coupled to the output of overdischarge monitor 4 to prevent reverse currents. The output of anti-reverse current unit 5 is provided to supply a current to a load circuit 6 from the DC voltage source during a charging mode and from the battery 7 during a discharging mode. If the load circuit 6 is a portable volatile memory, the charging controller 2 operates the charger in a permanent charging mode if the memory is the charger is disconnected from the DC voltage source 1.

A voltage sensor 8 is connected to the battery 7 to detect the battery voltage and supplies it to a comparator 9 in which it is compared with a low reference voltage supplied from a voltage setting unit 10. Comparator 9 supplies an enabling signal to a counter 11 when the battery voltage is lower than the reference voltage. On receiving an enabling signal, counter 11 starts counting clock pulses from a clock source 12 and applies a low-voltage signal to a warning lamp 13 when a predetermined count value is reached. This count value represens a time interval greater than the normal charging time but smaller than the charging time which will be taken when at least one cell of the battery 7 has failed.

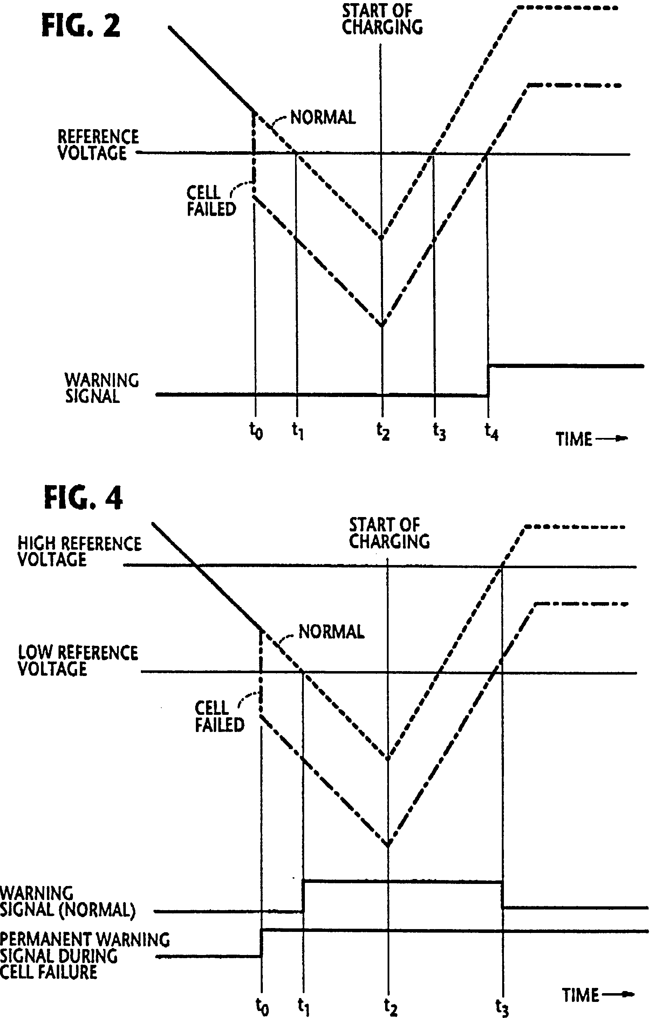

The operation of the battery charger will be better understand with reference to Fig. 2. When the battery voltage decreases during a discharging mode and eventually becomes lower than the reference voltage at time $t_1$. Comparator 9 enables counter 11 to start its count operation. The charger will eventually be switched to a charging mode under control of the charging controller 2 at time $t_2$ and the battery voltage will rise and exceed the reference voltage at time $t_3$. The rechargeable battery 7 is thus charged for an interval between times $t_1$ and $t_3$. Since this charging time is smaller than the interval corresponding to the predetermined value of counter 11, no output signal is supplied from counter 11 to warning lamp 13. Assume that a short-circuit failure occurred in a cell of the battery 7 at time $t_0$ during a discharging mode, the battery voltage sharply drops by an amount corresponding to the voltage of the failed cell so that it reduces to a level lower than the reference voltage. Comparator 9 produces an output signal and counter 11 starts its count operation. At time $t_2$ the charger is switched to a charging mode and the voltage of battery 7 will rise above the reference voltage at time $t_4$. Since the charging interval between $t_0$ and $t_4$ is greater than the interval corresponding to the value of counter 11, this counter produces an output signal and alarm is given by the warning lamp 13, indicating that the battery 7 has failed.

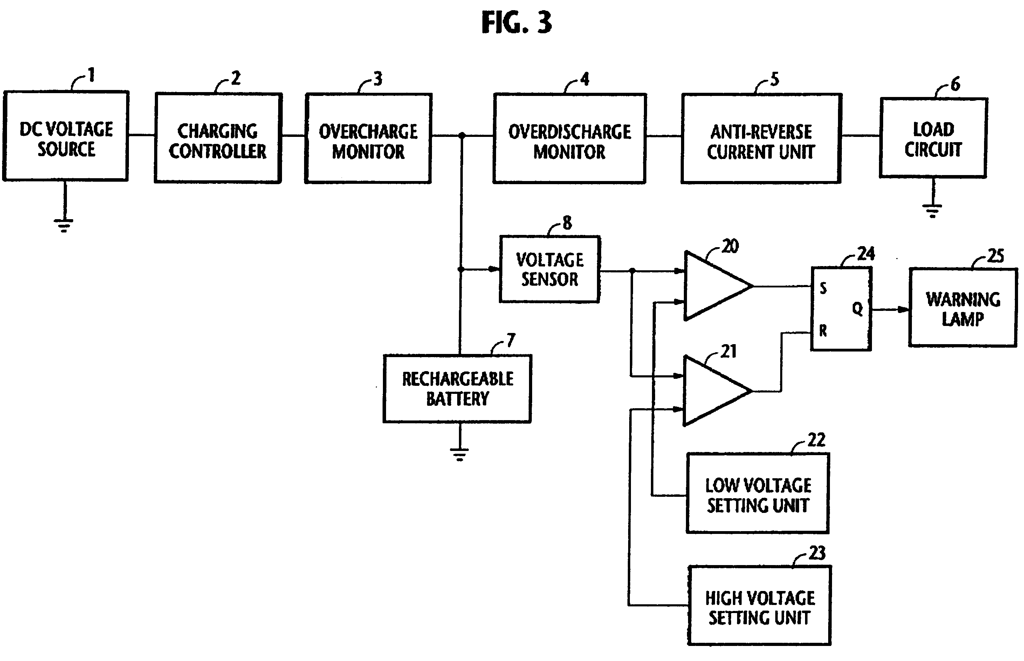

A second embodiment of this invention is shown in Fig. 3 in which parts corresponding to those in Fig. 1 are marked with the same numerals as those used in Fig. 1. A low-level comparator 20 and a high-level comparator 21 are coupled to the voltage sensor 8 for making a comparison with low and high reference voltages supplied from reference voltage setting units 22 and 23, respectively. Me high reference voltage set by the unit 23 is lower than the voltage which can be reached by the battery if it is charged during normal condition, but higher than a maximum voltage which it can reach if it is charged during a cell failure. The output of comparators 20 and 21 are coupled to the set and reset input terminals of a flip-flop 24, whose output is coupled to a warning lamp 25. When the battery voltage reduces below the low reference voltage, low-level comparator 20 produces an output signal for triggering the flip-flop 24 into a set condition, while high level comparator 21 produces an output signal for resetting the flip-flop when the battery voltage rises above the high reference voltage.

The operation of this circuit will be described with reference to Fig. 4. If the battery 7 ts normal and a voltage drop below the low reference level at time $t_1$ during a discharging operation will cause a setting signal to be supplied from low level comparator 20 to flip-flop 24. When the battery voltage rises above the high reference voltage at time $t_3$ after the charger is switched to a charging mode, flip-flop 24 is reset. Thus, warning lamp 25 is lit during an interval between $t_1$ and $t_3$. If a cell failure occurs at time to during a discharging mode, flip-flop 24 is triggered into a set condition, and the charger is switched to a charging mode at time $t_2$. Since the higher reference voltage is set higher than the maximum voltage of the battery 7 when it is charged during an abnormal condition, no input signal is supplied from high level comparator 21, and flip-flop 24 thus remains permanently in the set condition. In this way, warning lamp 25 gives a permanent alarm, indicating that the rechargeable battery 7 has failed.

## Claims

1. A battery charger for charging a multi-cell rechargeable battery, comprising:

   means for periodically operating the charger in a charging mode in which a DC voltage source supplies a charging current to said battery and a load current to load means and in a discharging mode in which said battery is allowed to supply a load current to said load means;

   comparator means for comparing a battery voltage of said rechargeable battery with a reference voltage and producing an output signal when the battery voltage is lower than the reference voltage; and

   counter means for generating a warning signal when a time interval of the output signal of said comparator means is longer than a specified interval.

2. A battery charger for charging a multi-cell rechargeable battery, comprising:

   means for supplying from a DC voltage source a charging current to said battery and a load current to load means during a charging mode and allowing said battery to supply a load current to said load means during a discharging mode instead of from said DC voltage source;

   comparator means for comparing a battery voltage of said rechargeable battery with a low reference voltage and producing a first output signal when the battery voltage is lower than the low reference voltage and for comparing the battery voltage with a high reference voltage and producing a second output signal when the battery voltage is higher than the high reference voltage, said high reference voltage being lower than a voltage to which said battery can be charged during a normal condition but higher than a voltage to which said battery ran be charged during an abnormal condition; and

   means for generating a warning signal when said first output signal is not followed by said second output signal.

# FIG. 1

# FIG. 2

START OF CHARGING

NORMAL

REFERENCE VOLTAGE

CELL FAILED

WARNING SIGNAL

$t_0$  $t_1$  $t_2$  $t_3$  $t_4$  TIME →

# FIG. 4

START OF CHARGING

HIGH REFERENCE VOLTAGE

NORMAL

LOW REFERENCE VOLTAGE

CELL FAILED

WARNING SIGNAL (NORMAL)

PERMANENT WARNING SIGNAL DURING CELL FAILURE

$t_0$  $t_1$  $t_2$  $t_3$  TIME →

## FIG. 3